# EUROPÄISCHE PATENTSCHRIFT

(11) **EP 0 937 625 B1**
(45) Veröffentlichungstag und Bekanntmachung des Hinweises auf die Patenterteilung: **06.10.2004**
(21) Anmeldenummer: 99102702.0
(22) Anmeldetag: 17.02.1999
(51) Int. Cl.: B62B 3/14, B62B 5/06, B62B 5/02

(54) **Stapelbarer Einkaufswagen**
Nestable shopping trolley
Chariot d'achat emboîtable

(30) Priorität: 18.02.1998 DE 19806644; 30.05.1998 DE 19824369
(43) Veröffentlichungstag der Anmeldung: 25.08.1999
(73) Patentinhaber: WANZL METALLWARENFABRIK GMBH, D-89336 Leipheim (DE)
(72) Erfinder: Wanzl, Rudolf, 89340 Leipheim (DE); Eckert, Rainer Dr,, 73230 Kirchheim/Teck (DE); Blaha, Martin, 89335 Ichenhausen (DE); Nägele, Günter, 89264 Weissenhorn (DE)

(56) Entgegenhaltungen:
- DE-U- 7 822 236
- US-A- 3 724 863
- PATENT ABSTRACTS OF JAPAN vol. 1996, no. 07, 31. Juli 1996 (1996-07-31) & JP 08 080856 A (OKAMURA CORP), 26. März 1996 (1996-03-26)

## Beschreibung

Die Erfindung betrifft einen stapelbaren, insbesondere zum Befördern auf einem Fahrsteig geeigneten Einkaufswagen, dessen Fahrgestell einen nach vorne sich verjüngenden, durch einen Boden, zwei Seitenwände, eine Stirnwand und eine schwenkbare Rückwand gebildeten Korb trägt und nahe der Rückwand ein quer verlaufender Griffholm angeordnet ist, der zum Schieben und Ziehen des Einkaufswagens dient, wobei der Griffholm mittels zweier Schwenkarme in Lagern um eine horizontale Achse verschwenkbar gelagert ist und wobei die Verschwenkbarkeit des tiefer als die horizontale Achse gelegenen Griffholmes durch einen Anschlagmechanismus festgelegt ist.

Die japanische Patentschrift JP-08080856 A beschreibt einen derartigen Einkaufswagen. Bei diesem Einkaufswagen sind Holme des Fahrgestelles zu beiden Seiten relativ weit nach hinten gezogen. An den Enden der Holme ist je ein Lager angeordnet. In den Lagern sind zwei Schwenkarme, die einen Griffholm tragen, begrenzt verschwenkbar gelagert. Eine die Holme verbindende Querstange sowie nahe der beiden Lager befindliche Anschläge sorgen dafür, daß der Griffholm nur begrenzt verschwenkbar gelagert ist. Dieser Einkaufswagen ist für den bevorzugten Einsatz auf Rolltreppen vorgesehen. Er läßt sich aber auch ohne weiteres auf Fahrsteigen befördern. Die Anordnung der nach hinten sich erstreckenden Holme ist aufwendig und deshalb teuer. Die Anschläge sowie die Querstange liegen offen, so daß befürchtet werden muß, daß bei unachtsamem Umgang mit dem Griffholm Finger eingeklemmt oder verletzt werden können.

Es ist Aufgabe der Erfindung, einen Einkaufswagen der hier vorliegenden Art so weiterzuentwickeln, daß die durch den Griffholm, die Schwenkarme und die Lager gebildete Anordnung so gestaltet werden kann, daß ein Anschrauben oder Annieten der beiden Lager vermieden wird und daß ein Verletzen der Finger beim Betätigen des schwenkbaren Griffholmes ausgeschlossen ist.

Es wird vorgeschlagen, zumindest die beiden Seitenwände des Korbes aus Kunststoff zu fertigen, die Lager an den Seitenwänden anzuformen und den Anschlagmechanismus für den Griffholm innerhalb der von den Lagern und den Schwenkarmen gebildeten gemeinsamen Verbindungsbereiche unterzubringen.

Durch das Gestalten der Seitenwände aus Kunststoff besteht die Möglichkeit, die beiden Lager beim Spritzvorgang der Seitenwände in einem Arbeitsgang anzuformen. Eine separate Befestigung der Lager entfällt somit, was sich als kostenreduzierend erweist. Von Vorteil ist auch, daß der Anschlagmechanismus für den Griffholm nach außen hin nicht sichtbar ist. Es ist also ausgeschlossen, daß man sich beim Verschwenken des Griffholmes die Finger an den Anschlägen verletzen kann. Neben diesen zweckmäßigen Verbesserungen erhält der so gestaltete Einkaufswagen auch ein gefälliges Aussehen, was die Verkaufschancen des Einkaufswagens verbessert.

Gemäß einer Ausgestaltung der Erfindung wird ferner vorgeschlagen, nahe des Griffholmes an jeder Seitenwand einen Griffabschnitt anzuformen. Die Griffabschnitte sind dabei mit ihrem Griffbereich höher angeordnet als der Griffholm. Der Benutzer des Einkaufswagens kann somit selbst bestimmen, ob er zum Schieben und Ziehen den Griffholm nimmt oder sich der beiden Griffabschnitte bedient. Insbesondere großgewachsene Personen werden sich für die Griffabschnitte entscheiden.
Beim Transport des Einkaufswagens auf einem Fahrsteig wird man bei Aufwärtsfahrt den Einkaufswagen am tiefer gelegenen Griffholm halten, da man tiefer als der Einkaufswagen steht. Bei Abwärtsfahrt hingegen wird der Benutzer des Einkaufswagens die Griffabschnitte ergreifen, da man in diesem Falle höher als der Einkaufswagen auf dem Fahrsteig steht.

Unabhängig davon, ob der Einkaufswagen mit oder ohne Griffabschnitte ausgestattet ist, erweist es sich als vorteilhaft, nicht nur die Schiebeeinrichtung, sondern auch die Rückwand über die beiden Lager zu lagern. Dadurch können nicht nur Kosten eingespart werden, sondern die aus der Schiebeeinrichtung und der Rückwand gebildete Anordnung kann bei der Montage des Einkaufswagens als Baugruppe in die Lager eingefügt werden. Dazu brauchen die beiden Lager aufgrund der Elastizität der Seitenwände lediglich etwas zur Seite gedrückt werden, um die Enden einer Querstange, welche die Rückwand und die beiden Schwenkarme mit dem Griffholm trägt, in die Aufnahmebohrungen der Lager einzuführen. Anschließend federn die Lager in ihre Ausgangslage zurück, wobei das Anbringen von Sicherungsteilen an den Enden der Querstange genügt, um diese in den Lagern gegen Lösen zu sichern.

Die Erfindung wird anhand von Zeichnungen näher erläutert. Es zeigt
Fig. 1 einen Einkaufswagen;
Fig. 2 eine Seitenansicht der Schiebeeinrichtung;
Fig. 3 einen Schnitt durch die in Fig. 2 gezeigte Anordnung;
Fig. 4 einen Schnitt gemäß Fig. 3 mit zusätzlich gelagerter Rückwand sowie
Fig. 5 einen mit zusätzlichen Griffabschnitten ausgestatteten Einkaufswagen.

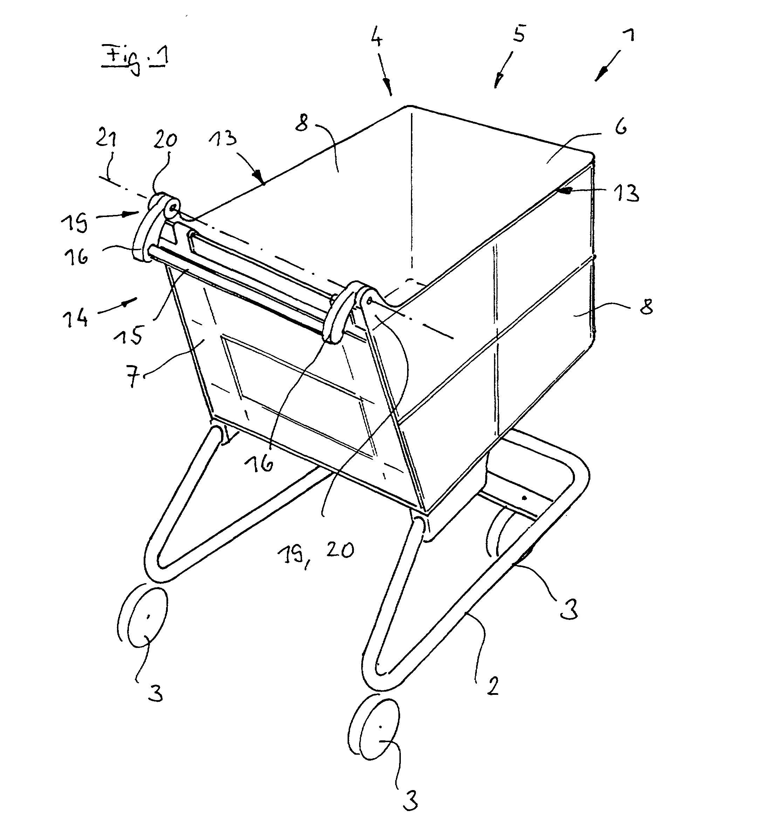

Der in Fig. 1 schematisch dargestellte stapelbare, insbesondere zum Befördern auf einem Fahrsteig geeignete Einkaufswagen 1 weist ein mit Rollen 3 ausgestattetes Fahrgestell 2 auf, das einen nach vorne sich verjüngenden, durch einen Boden 5, zwei Seitenwände 8, eine Stirnwand 6 und eine schwenkbare Rückwand 7 gebildeten Korb 4 trägt. Die schwenkbare Rückwand 7 weicht in bekannter Weise in das Innere des Korbes 4 aus, wenn ein weiterer Einkaufswagen 1' platzsparend in den eben beschriebenen Einkaufswagen 1 eingeschoben, also gestapelt wird. Nahe der Rückwand 7 ist eine einen Griffholm 15 aufweisende Schiebeeinrichtung 14 vorgesehen, die mit Hilfe zweier Schwenkarme 16 in Lagern 20 um eine quer zur Schieberichtung des Einkaufswagens 1 sich erstreckende horizontale Achse 21 begrenzt schwenkbar gelagert ist. Der Griffholm 15 ist in Gebrauchslage der Schiebeeinrichtung 14 tiefer angeordnet als die horizontale Achse 21. An den Seitenwänden 8 des Korbes 4 sind die Lager 20 angeformt, welche die Schiebeeinrichtung 14 tragen. Die begrenzte Verschwenkbarkeit des Griffholmes 15 und damit der Schiebeeinrichtung 14 ist durch zwei Anschläge 19 festgelegt. Die Lager 20 erlauben ein sicheres Schieben des Einkaufswagens 1. Beim Ziehen des Einkaufswagens 1 wird die Schiebevorrichtung 14 gewöhnlich nur ein Stück weit nach oben verschwenkt. Im Stillstand des Einkaufswagens 1 läßt sich die Schiebeeinrichtung 14 funktionslos verschwenken. Aufgrund ihres Eigengewichtes nimmt die Schiebeeinrichtung 14 die nach unten geschwenkte Lage ein. Hebt man die Schiebeeinrichtung 14 an und läßt sie anschließend los, fällt diese automatisch nach unten.

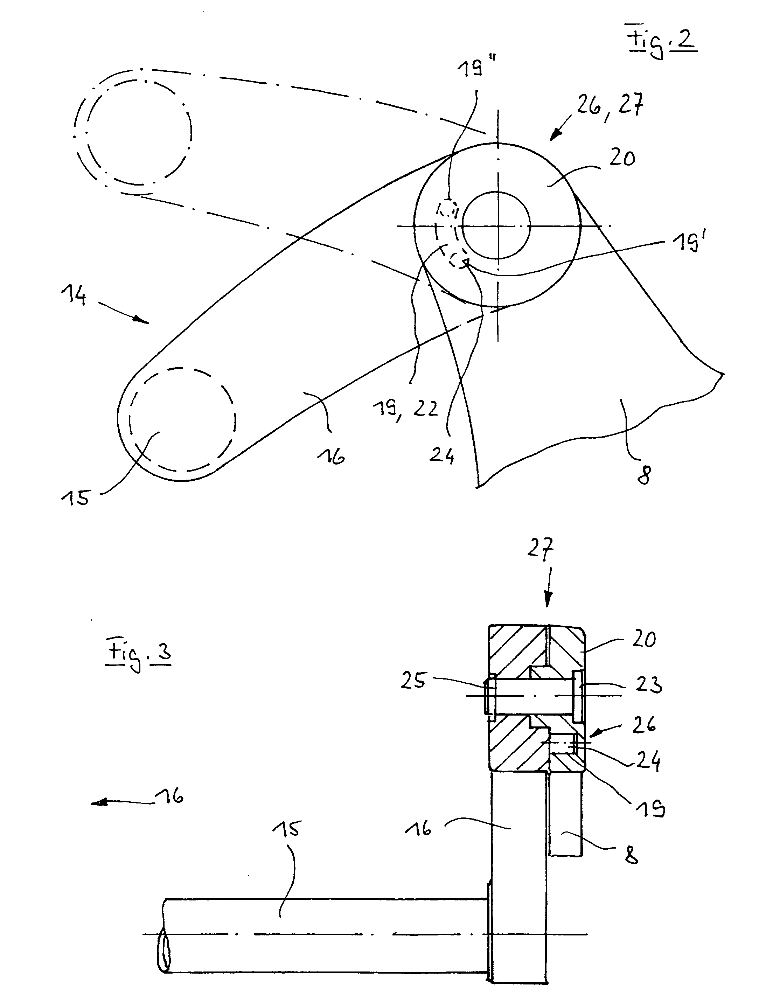

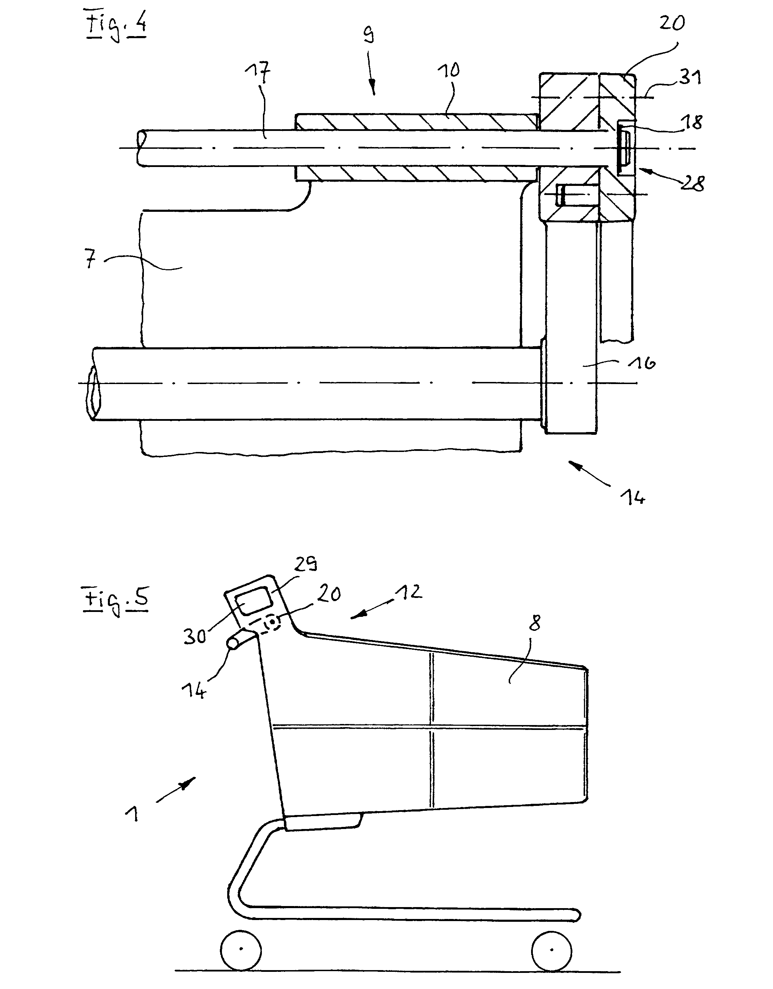

Ausschnittweise und in Seitenansicht betrachtet zeigt Fig. 2 jenen Bereich einer der beiden Seitenwände 8, an welchem einer der beiden Schwenkarme 16 schwenkbar gelagert ist. Beim Korb 4 sind zumindest die beiden Seitenwände 8 aus Kunststoff gefertigt. Die Seitenwände 8 sind bevorzugt als einstückige Formteile ausgebildet. Jede Seitenwand 8 ist nahe der Schiebeeinrichtung 14 spiegelbildlich nach oben gezogen, um je ein Lager 20 zu bilden. Jedes Lager 20 ist an einer Seitenwand 8 angeformt und jedes Lager 20 weist einen nierenförmigen Durchbruch 22 auf. Jeder Durchbruch 22 bildet einen Anschlag 19 für einen Vorsprung 24, der jeweils an einem Schwenkarm 16 angeordnet ist, vgl. auch Fig. 3. In nach unten abgesenkter Lage der Schiebeeinrichtung 14 liegt jeder Vorsprung 24 am unteren Ende 19' eines der beiden Anschläge 19 an. In nach oben geschwenkter Lage der Schiebeeinrichtung 14, strichpunktiert gezeichnet, stößt jeder Vorsprung 24 am oberen Ende 19" eines der beiden Anschläge 19 an. Der Schwenkbereich der Schiebeeinrichtung 14 ist damit bestimmt. Durch die Anschläge 19, die nierenförmigen Durchbrüche 22 und durch die beiden Vorsprünge 24 ist ein Anschlagmechanismus 26 gebildet, der sich innerhalb der beiden, von den Lagern 20 und den Schwenkarmen 16 gebildeten Verbindungsbereiche 27 befindet. Der Anschlagmechanismus 26 ist nach außen hin nicht oder nur unwesentlich sichtbar.

In einer Draufsicht und im Schnitt zeigt Fig. 3 die in Fig. 2 beschriebene Anordnung. Man erkennt das am oberen hinteren Ende einer Seitenwand 8 vorgesehene Lager 20. Von außen führt ein Bundbolzen 23 durch das Lager 20, um mit einem Abschnitt seines Schaftes einen der beiden Schwenkarme 16 zu tragen. Der Schwenkarm 16 ist mit Hilfe eines Sicherungsmittels 25 gegen Lösen gesichert am Bundbolzen 23 und damit am Lager 20 angeordnet. Der Schwenkarm 16 wird vom Lager 20 getragen. Der am Schwenkarm 16 angeordnete Vorsprung 24 taucht in den langlochartigen Anschlag 19 ein. In der Zeichnung ist noch ein Teil des Griffholmes 15 dargestellt, der zum gegenüberliegenden Schwenkarm 16 führt und der in spiegelbildlicher Weise am Lager 20 der anderen Seitenwand 8 angeordnet ist.

Fig. 4 zeigt die in Fig. 3 dargestellte Anordnung, jedoch dadurch erweitert, daß die Rückwand 7 mit Hilfe einer Querstange 17 ebenfalls in den Lagern 20 schwenkbar gelagert ist. Die Querstange 17 durchdringt dabei buchsenförmige Ansätze 10, die sich am oberen Rand 9 der Rückwand 7 befinden. Die Rückwand 7 kann, wie bekannt, als eine ebene Wand ausgebildet sein. Es ist aber auch in bekannter Weise möglich, die Rückwand 7 als aufklappbare Kindersitzanordnung zu gestalten, die aus besagter Wand, einer Rükkenlehne und aus einer bewegbar mit der Wand und der Rückenlehne verbundenen Sitzplatte besteht. Um ein Lösen der gesamten, aus der Rückwand 7 und der Schiebeeinrichtung 14 bestehenden Anordnung zu verhindern, sind an den Enden der Querstange 17 Sicherungsmittel 18 bekannter Art aufgesetzt. Die Öffnungen 28 der Lager 20 können zusätzlich durch in die Öffnungen 28 einsetzbare, nicht näher dargestellte Abschlußstücke verschlossen sein, wobei die Abschlußstücke durchaus auch eine Sicherungsfunktion für die Querstange 17 erfüllen können, so daß auf die vorab erwähnten Sicherungsmittel 28 verzichtet werden kann.
Die mit der Positionszahl 31 gekennzeichnete strichpunktierte Linie soll eine Arretiereinrichtung andeuten, mit deren Hilfe es möglich ist, die Schiebeeinrichtung 14 in wenigstens einer vorbestimmten Lage zu arretieren. Dazu genügt es, in der Wandung eines jeden Lagers 20 eine horizontal angeordnete Bohrung vorzusehen und wenigstens eine weitere gleiche und gleich angeordnete Bohrung im angrenzenden Nabenstück eines jeden Schwenkarmes 16 anzubringen. Bringt man zwei der eben genannten Bohrungen in eine deckungsgleiche Lage und setzt einen Paßstift ein, so ist die Schiebeeinrichtung 14 in ihrer Lage fixiert.

Fig. 5 zeigt einen Einkaufswagen 1 in Seitenansicht, dessen Seitenwände 8 im hinteren oberen Bereich 12 nach oben geführt und zu je einem ortsfest angeordneten Griffabschnitt 29 weiterentwickelt sind. Im Beispiel sind die Griffabschnitte 29 in sich geschlossen gestaltet, wobei zentral ein Durchbruch 30 vorgesehen ist. Es sind jedoch auch andere zweckmäßige Griffformen möglich. Aus der Zeichnung ist die Schiebeeinrichtung 14 ersichtlich, die nach hinten vorsteht. Die Lager 20 sind innerhalb der Grifabschnitte 29 angeordnet. Sie können aber auch außerhalb der Griffabschnitte 29 und wiederum dicht an den Seitenwänden 8 angeformt sein.

Beim platzsparenden Ineinanderschieben zweier Einkaufswagen 1 unterfährt der obere Rand 13 der Seitenwände 8 des Korbes 4 eines rückwärtig einzuschiebenden Einkaufswagens 1 den Griffholm 15 der Schiebeeinrichtung 14 des vorausbefindlichen Einkaufswagens 1 und verschwenkt den Griffholm 15 ein Stück weit nach oben. Zieht man einen eingeschobenen Einkaufswagen 1 zum Zwecke des Entstapelns wieder aus einem vorausbefindlichen Einkaufswagen 1 heraus, fällt dessen Schiebeeinrichtung 14 durch das Eigengewicht wieder nach unten in die Ausgangslage, ohne irgendeine Funktion auf den Einkaufswagen 1 auszuüben.

## Patentansprüche

1. Stapelbarer, insbesondere zum Befördern auf einem Fahrsteig geeigneter Einkaufswagen (1), dessen Fahrgestell (2) einen nach vorne sich verjüngenden, durch einen Boden (5), zwei Seitenwände (8), eine Stirnwand (6) und eine schwenkbare Rückwand (7) gebildeten Korb (4) trägt und nahe der Rückwand (7) ein quer verlaufender Griffholm (15) angeordnet ist, der zum Schieben und Ziehen des Einkaufswagens (1) dient, wobei der Griffholm (15) mittels zweier Schwenkarme (16) in Lagern (20) um eine horizontale Achse (21) gelagert ist und wobei die Verschwenkbarkeit des tiefer als die horizontale Achse (21) gelegenen Griffholmes (15) durch einen Anschlagmechanismus (26) festgelegt ist, **dadurch gekennzeichnet, daß** zumindest die beiden Seitenwände (8) des Korbes (4) aus Kunststoff gefertigt sind, daß die Lager (20) an den Seitenwänden (8) angeformt sind und daß sich der Anschlagmechanismus (26) innerhalb der beiden, von den Lagern (20) und den Schwenkarmen (16) gebildeten Verbindungsbereiche (27) befindet.

2. Stapelbarer Einkaufswagen nach Anspruch 1, **dadurch gekennzeichnet, daß** jede Seitenwand (8) nahe des Griffholmes (15) spiegelbildlich nach oben gezogen ist, um je ein Lager (20) zu bilden.

3. Stapelbarer Einkaufswagen nach Anspruch 1 oder 2, **dadurch gekennzeichnet, daß** die Lager (20) spiegelbildlich zueinander angeordnet sind.

4. Stapelbarer Einkaufswagen nach einem der Ansprüche 1 bis 3, **dadurch gekennzeichnet, daß** der Anschlagmechanismus (26) durch einen an jedem Lager (20) befindlichen Durchbruch (22), durch zwei an jedem Durchbruch (22) befindliche Anschläge (19) und durch einen an jedem Schwenkarm (16) angeordneten Vorsprung (24) gebildet ist.

5. Stapelbarer Einkaufswagen nach einem der Ansprüche 1 bis 4, **dadurch gekennzeichnet, daß** der Anschlagmechanismus (26) nach außen nicht sichtbar ist.

6. Stapelbarer Einkaufswagen nach einem der Ansprüche 1 bis 5, daß die Rückwand (7) ebenfalls in den Lagern (20) verschwenkbar gelagert ist.

7. Stapelbarer Einkaufswagen nach einem der Ansprüche 1 bis 6, **dadurch gekennzeichnet, daß** im hinteren oberen Bereich (12) der Seitenwände (8) an den Seitenwänden (8) je ein Griffabschnitt (29) angeformt ist.

8. Stapelbarer Einkaufswagen nach Anspruch 7, **dadurch gekennzeichnet, daß** die Lager (20) innerhalb der Griffabschnitte (29) angeordnet sind.

9. Stapelbarer Einkaufswagen nach einem der Ansprüche 1 bis 8, **dadurch gekennzeichnet, daß** die aus dem Griffholm (15) und den Schwenkarmen (16) bestehende Schiebeeinrichtung (14) in einer vorbestimmten Lage arretierbar gelagert ist.

## Claims

1. A stackable shopping trolley (1), in particular suitable for transporting on a moving walkway, of which the chassis (2) carries a forwardly tapering basket (4) formed by a base (5), two side walls (8), a front wall (6) and a pivotable rear wall (7), and a transversely extending handlebar (15) is arranged close to the rear wall (7) which serves for pushing and pulling the shopping trolley (1), wherein the handlebar (15) is mounted by means of two pivot arms (16) in bearings (20) around a horizontal axis (21) and wherein the pivotability of the handlebar (15), which is located lower than the horizontal axis (21), is defined by a stop mechanism (26), **characterised in that** at least the two side walls (8) of the basket (4) are manufactured from plastics material, **in that** the bearings (20) are moulded to the side walls (8), and **in that** the stop mechanism (26) is located within the two connection regions (27) formed by the bearings (20) and the pivot arms (16).

2. A stackable shopping trolley according to Claim 1, **characterised in that** each side wall (8) close to the handle (15) is drawn upwardly in mirror-image relationship, in order to form respective bearings (20).

3. A stackable shopping trolley according to Claim 1 or 2, **characterised in that** the bearings (20) are arranged so as to be in mirror-image relationship with one another.

4. A stackable shopping trolley according to one of Claims 1 to 3, **characterised in that** the stop mechanism (26) is formed by a through-hole (22) located on each bearing (20), by two stops (19) located on each through-hole (22), and by a projection (24) arranged on each pivot arm (16).

5. A stackable shopping trolley according to one of Claims 1 to 4, **characterised in that** the stop mechanism (26) is not outwardly visible.

6. A stackable shopping trolley according to one of Claims 1 to 5, **characterised in that** the rear wall (7) is also pivotally mounted in the bearings (20).

7. A stackable shopping trolley according to one of Claims 1 to 6, **characterised in that**, in the rear upper region (12) of the side walls (8), respective handle portions (29) are moulded to the side walls (8).

8. A stackable shopping trolley according to Claim 7, **characterised in that** the bearings (20) are arranged within the handle portions (29).

9. A stackable shopping trolley according to one of Claims 1 to 8, **characterised in that** the pushing device (14) constituted by the handlebar (15) and the pivot arms (16) is mounted so as to be lockable in a predetermined position.

## Revendications

1. Chariot (1) emboîtable adapté en particulier à l'acheminement sur un trottoir roulant dont le châssis (2) porte un panier (4) convergent vers l'avant formé d'un fond (5), de deux parois latérales (8), d'une paroi frontale (6) et d'une paroi arrière pivotable (7) et sur lequel une poignée positionnée transversalement (15) servant à tirer et à pousser le chariot (1) est disposée à proximité de la paroi arrière (7), la poignée (15) étant logée au moyen de deux bras pivotants (16) dans des paliers (20) autour d'un axe horizontal (21) et la capacité de pivotement de la poignée (15) située plus bas que l'axe horizontal (21) étant déterminée par un mécanisme de butée (26), **caractérisé en ce qu'**au moins les deux parois latérales (8) du panier (4) sont réalisées en matière plastique, **en ce que** les paliers (20) sont façonnés sur les parois latérales (8) et **en ce que** le mécanisme de butée (26) se trouve à l'intérieur des zones d'assemblage (27) formées par les paliers (20) et les bras pivotants (16).

2. Chariot emboîtable selon la revendication 1, **caractérisé en ce que** chaque paroi latérale (8) est étendue vers le haut à proximité de la poignée (15) de façon inversée, afin de former chacune un palier (20).

3. Chariot emboîtable selon la revendication 1 ou 2, **caractérisé en ce que** les paliers (20) sont disposés de manière inversée l'un par rapport à l'autre.

4. Chariot emboîtable selon l'une quelconque des revendications 1 à 3, **caractérisé en ce que** le mécanisme de butée (26) est formé d'une ouverture (22) se trouvant sur chaque palier (20), de deux butées (19) se trouvant sur chaque ouverture (22) et d'un ergot (24) disposé sur chaque bras pivotant (16).

5. Chariot emboîtable selon l'une quelconque des revendications 1 à 4, **caractérisé en ce que** le mécanisme de butée (26) n'est pas visible de l'extérieur.

6. Chariot emboîtable selon l'une quelconque des revendications 1 à 5, **caractérisé en ce que** la paroi arrière (7) est également logée de façon à pouvoir être pivotée dans les paliers (20).

7. Chariot emboîtable selon l'une quelconque des revendications 1 à 6, **caractérisé en ce qu'**une section de poignée (29) est façonnée dans la zone arrière supérieure (12) des parois latérales (8) sur chacune des parois latérales (8).

8. Chariot emboîtable selon la revendication 7, **caractérisé en ce que** les paliers (20) sont disposés à l'intérieur des sections de poignée (29).

9. Chariot emboîtable selon l'une quelconque des revendications 1 à 8, **caractérisé en ce que** le dispositif de poussée (14) composé de la poignée (15) et des bras pivotants (16) est logé de façon à pouvoir être arrêté dans une position prédéfinie.
